# EUROPÄISCHE PATENTSCHRIFT

(11) **EP 0 934 183 B1**
(45) Veröffentlichungstag und Bekanntmachung des Hinweises auf die Patenterteilung: **07.06.2000**
(21) Anmeldenummer: 97948685.9
(22) Anmeldetag: 21.10.1997
(51) Int. Cl.: B60R 21/20

(54) **Innenverkleidungsteil für Kraftfahrzeuge mit Airbag-Ausrüstung**
Interior trim panel for motor vehicles fitted with an airbag
Elément de revêtement pour l'habitacle d'un véhicule automobile équipé d'un airbag

(30) Priorität: 31.10.1996 DE 19646548
(43) Veröffentlichungstag der Anmeldung: 11.08.1999
(73) Patentinhaber: SAI Automotive SAL GmbH, 76732 Wörth am Rhein (DE)
(72) Erfinder: RAHMSTORF, Peter, F-38380 Saint Laurent du Pont (FR); CREUTZ, Lydia, F-67340 Ingwiller (FR)
(74) Vertreter: Pfenning, Meinig & Partner
(86) Internationale Anmeldenummer: DE9702515
(87) Internationale Veröffentlichungsnummer: WO9818658

(56) Entgegenhaltungen:
- EP-A- 0 639 481
- WO-A-92/17351
- US-A- 5 108 128
- US-A- 5 533 749

## Beschreibung

Die Erfindung betrifft ein Innenverkleidungsteil für Kraftfahrzeuge mit Airbag-Ausrüstung gemäß dem Oberbegriff des Anspruchs 1 (siehe z.B. US-A-5 407 225).

Insassen-Rückhaltevorrichtungen mit aufblasbarem Gassack, im folgenden "Airbag" genannt, finden zunehmend in Kraftfahrzeugen Verwendung, nicht nur für den Fahrzeugführer, sondern auch für den Beifahrer, und zwar sowohl als Frontschutz als auch als Seitenairbag zum Schutz gegen einen Seitenaufprall. Der Fahrer-Airbag zum Schutz vor frontalen Unfällen hat seinen "natürlichen" Platz in der Lenkradnabe und fügt sich somit zwangslos in die Innenraumgestaltung des Fahrzeuges ein, dagegen benötigen Beifahrer- und Seitenairbags Einbauorte, die den Gesamteindruck des Innenraumes entscheidend prägen, nämlich die freie Fläche der Armaturentafel vor dem Beifahrer und die Seitenverkleidungen der Türen. Komplette Airbag-Einheiten, d.h. einbaufertige Kombinationen von Gasgenerator, Airbag und Abdeckung, unterbrechen diese "Gestaltungsflächen" durch Farb- und Musterabweichungen, vor allem aber durch das entstehende "Fugenbild", das infolge unvermeidbarer Einbautoleranzen häufig unregelmäßig und damit unschön ist. Es besteht daher die Tendenz, Beifahrer- und Seitenairbag "unsichtbar" einzubauen, d.h. hinter durchgehenden Kaschierungen anzuordnen.

Beim Stand der Technik sind bei gesonderten Airbag-Kompletteinheiten die Abdeckungen des Führungskanals für den Airbag als ein- oder zweiflügelige Klappen ausgebildet, die um "plastische Scharniere" schwenkbar sind und so unter dem Druck des expandierenden Airbags eine Durchtrittsöffnung freigeben. Dieser Stand der Technik wird auch bei "unsichtbarem" Einbau des Airbags im Prinzip beibehalten. "Klappnuten", d.h. Querschnittsschwächungen des Trägerteils, die ein "plastisches Gelenk" bilden (gegebenenfalls mit einer eingearbeiteten Metalleinlage verstärkt), und "Reißnuten", die das Öffnen der Klappen sicherstellen sollen, geben dabei den Öffnungsbereich für den Airbag in der durchgehenden Verkleidung vor. Die durch diese Nuten begrenzten Klappen öffnen sich unter dem Druck des expandierenden Airbags zur Fahrgastzelle hin, so daß sich dieser hierhin ausdehnen kann (beispielsweise DE-GM 295 11 172).

Problematisch ist hierbei das Reißverhalten der Kaschierung sowohl beim notwendigen Anriß als auch beim Weiterriß, der möglichst symmetrisch erfolgen sollte, um die Funktion des Airbags nicht zu gefährden. Es ist daher üblich (DE-GM 295 11 172), auch die Kaschierung längs der Reißnaht im Querschnitt zu schwächen, also hier einzukerben. Eine Querschnittsschwächung von mehr als 60 % wird dabei für notwendig erachtet und in Werksnormen auch zum Teil vorgeschrieben. Dieses Vorgehen besitzt aber immer noch eine Reihe von Nachteilen:
- Die Ausbildung großflächiger Klappen beim Öffnen des Airbag-Kanals birgt die Gefahr des Abrisses dieser Klappen, die dann im Fahrgastraum ein zusätzliches Verletzungsrisiko bedeuten.
- Eine mehr als 60 %ige Querschnittsschwächung definiert durchzuführen, erfordert in Anbetracht der Dickentoleranz der Kaschierfolien einen erheblichen Fertigungs- und Kontrollaufwand.
- Die notwendige Querschnittsschwächung der Kaschierfolie ist so groß, daß die Gefahr besteht, daß sich dieser Bereich auf der Sichtseite abzeichnet.

Es gibt daher Vorschläge, mit dem expandierenden Airbag gesondert Schneidmesser zu betätigen, um so unabhängig von Toleranzen in der Kaschierfoliendicke ein definiertes Aufreißen der Kaschierung sicherzustellen (US-A-5 316 335), eine Vorgehensweise, die zusätzlichen Fertigungsaufwand erfordert und bei der die verhältnismäßig "robusten" Messer ein weiteres Verletzungsrisiko bedeuten (die Messer durchtrennen sowohl das Trägerteil als auch die Kaschierung).

Gleiches gilt für die Airbag-Abdeckung nach US 5 375 875. Hier ist eine zusätzliche Durchstoßvorrichtung mit drei Durchstoßzinken hinter einer durchgehenden Klappe angebracht, wobei die Zinken die Verschlußkappe im Betätigungsfalle örtlich durchgreifen. Die zusätzliche Durchstoßvorrichtung ist zur Airbag-Seite hin federnd und/oder gelenkig mit der durchgehenden Verschlußkappe verbunden, die zur Dekorschicht hin umlaufend einen aufgestellten Rand aufweist, der das Aufreißen bewirkt. Auch diese Lösung erfordert einen erheblichen fertigungstechnischen Aufwand.

Eine speziell für Lederkaschierungen verwendbare Ausbildung einer Reißnaht wird in EP-A-0 639 481 angegeben. Hierzu wird das Leer rückseitig im Bereich der Reißnaht bis auf mehr als die Hälfte seiner Dicke chemisch "gehärtet", d.h. versprödet, und zwar durch partielles Tränken mit Lacken oder ähnlichen Substanzen. Abgesehen davon, daß dieses Prinzip nur für den durchfeuchtbaren Naturstoff Leder anwendbar zu sein scheint, bereitet auch die paßgenaue Zuordnung der vorgefertigten Reißnaht zur Geometrie des Airbagdeckels beim Hinterschäumen fertigungstechnische Probleme.

Das Prinzip, mit dem aufgestellten Rand einer die Austrittsöffnung des Airbags abschließenden Klappe die Dekorschicht definierter aufzureißen, findet sich auch in US 5 407 225, hier allerdings ohne eine gesonderte zusätzliche Durchstoßvorrichtung. Aber auch diese vereinfachte Ausführung besitzt noch den Nachteil, daß zusätzlicher Gewichts- und Fertigungsaufwand erforderlich ist. Darüber hinaus wird eine einstückige Fertigung der Innenverkleidungsteile, d.h. die Herstellung in einem Arbeitsgang, zumindest erschwert.

Ausgehend von dem vorstehend umrissenen Stand der Technik bei der Unterbringung "unsichtbarer" Airbags gemäß US 5 407 225 stellt sich die Erfindungsaufgabe, ein Innenverkleidungsteil anzugeben, das
- Bei Wahrung einer einwandfreien Ansicht dem Airbag einer hinter der Verkleidung angeordneten Airbag-Einheit definierten Durchtritt ermöglicht, und zwar unter Sicherstellung eines reproduzierbaren Reißverhaltens auch bei der Kaschierung,
- Die Abrißgefahr von Verkleidungsteilen minimiert und damit zur Insassensicherheit beiträgt, und
- Zusätzlichen Fertigungsaufwand für die "Unsichtbarkeit" des Airbags weitgehend vermeidet.

Diese Aufgabe wird bei einem Innenraum-Verkleidungsteil nach dem Oberbegriff des Anspruchs 1 erfindungsgemäß gelöst durch die Merkmale des kennzeichnenden Teils dieses Anspruchs; die Ansprüche 2 bis 15 geben vorteilhafte Weiterbildungen des erfindungsgemäßen Verkleidungsteils an.

Die Gefahr, daß sich öffnende ein- oder zweiflügelige Klappen abgerissen und in den Fahrzeuginnenraum geschleudert werden, wird dadurch vermieden, daß ein anderes Öffnungsschema gewählt wird: Der rechteckige Abdeckbereich des Führungskanals wird längs seiner Mittellinie aufgerissen und die Aufrißfläche kann durch mehrere kurze Querrisse "aufgeweicht" werden. Da auf "plastische" Scharniere verzichtet wird, entstehen keine "Klappen", sondern der so aufgerissene Bereich öffnet sich mit näherungsweise einem "Spitzoval", d.h. ähnliche einem Fischmaul. Dabei wird der Bandbereich des Aufrisses im wesentlichen elastisch verformt und nicht so sehr durch örtlich konzentrierte plastische Biegung belastet, wodurch die Gefahr von Materialabrissen weitgehend vermieden wird. Das Aufrißmuster wird dabei, wie an sich üblich, durch rückseitige Kerben im Trägerteil vorgegeben. Eine wesentliche Rolle spielt bei der "Fischmaul-Lösung" das definierte Aufreißverhalten der Kaschierungsfolie, das dadurch optimiert wird, daß zwischen dem Trägerteil und der Kaschierungsfolie ein Schneidblech angeordnet ist, dessen Schneidkanten mit den Aufrißkerben im Trägerteil deckungsgleich sind. Dadurch wird ein gleichzeitiges und gleichmäßiges Aufreißen von Trägerteil und Kaschierung sichergestellt.

Das Schneidblech ist dabei im Gegensatz zu den Messern beispielsweise gemäß US 5 316 335 oder US 5 375 875 keine aufwendige Konstruktion, sondern ein dünnes, folienartiges Metallblech, vorzugsweise eine Stahlfolie von 0,05 bis 0,2 mm Dicke, in die das Schneidkantenmuster als durchgestanztes Schlitzmuster eingebracht ist.

Durch den expandierenden Airbag und begünstigt durch die Einkerbungen des Trägerteils wölbt sich der Aufrißbereich zunächst; dabei werden die Schlitzkanten des Schneidbleches aufgestellt und sorgen für den definierten Aufriß der Kaschierung zusammen mit dem des Trägerteils. Das Schneidblech ist einfach und kostengünstig zu fertigen und ohne Aufwand zwischen Trägerteil und Kaschierung anzuordnen. Vor allem dann, wenn, wie meist üblich, eine Polsterschaumschicht angeordnet ist, ist die dünne Schneidplatte sichtseitig nicht markiert.

Das Aufreißverhalten, vor allem der definierte Beginn der "Maulöffnung" von der Mitte her, kann noch dadurch optimiert werden, daß die Mittellinie des Kerbmusters im Trägerteil und des Schneidkantenmusters im Schneidblech in der Mitte einen bogenförmigen Verlauf nimmt, so daß eine zungenförmige Schneidzone mit erhöhter Schneidspannung entsteht, die den örtlich definierten Aufriß der Kaschierung einleitet.

Ähnlich vorteilhaft wirkt es sich aus, wenn die Schneidkanten der Schneidplatte nach Art von Säge zähnen gestanzt sind. Es entstehen dann längs der Aufrißlinien viele Spannungshäufungszonen, die den Aufriß der Kaschierung begünstigen. Die Sägezahnform ist zur Erzeugung von Spannungsspitzen beim Aufreißen der Kaschierung besonders vorteilhaft, andere Geometrien wie beispielsweise eine Wellung der Schneidkanten wirken ähnlich und können, wenn es beispielsweise aus Fertigungsgründen zweckmäßig ist, verwendet werden.

Besonders vorteilhaft ist es, wenn die Ränder der Schneidkanten hohlkehlenförmig ausgebildet sind, und zwar mit aufgestellten, zur Kaschierung weisenden Schneidkanten, die gegebenenfalls auch als angeschärfte Schneiden ausgebildet sein können. Auf diese Weise wird erreicht, daß die Schneidkanten des Schneidbleches immer einen optimalen Schneidwinkel gegenüber der Kaschierung einnehmen, wobei auch in dieser Ausführungsform die Schneidkanten gezahnt oder gewellt ausgeführt sein können.

Das Schneidblech kann eine durchgehende Blechplatte mit entsprechendem gestanzten Schlitzmuster sein. Vorteilhaft kann es aber sein, wenn das Schneidblech Aussparungen besitzt, daß ein dem Linienmuster der Schneidkanten entsprechendes Stegmuster entsteht. Das Schneidblech wird auf diese Weise "biegeweich" und behindert die Aufwölbung des Aufrißbereiches zum "Fischmaul" nicht.

Die Schneidplatte kann, wenn es der Ablauf der Fertigung zweckmäßig erscheinen läßt, bei der Trägerteilfertigung aufgebracht und fixiert werden. In jedem Fall ist es aber günstig, wenn das Schneidblech festhaftend mit der Rückseite der Kaschierung verbunden ist. Dadurch werden Gleitbewegungen der Kaschierung gegenüber dem Schneidblech unterbunden, durch die eine Spannungsverteilung in der Kaschierung beim Aufwölben des Aufrißbereiches bewirkt würde, die die gewünschte Spannungskonzentration im Schneidbereich minderte.

Auch fertigungstechnisch kann es vorteilhaft sein, das Schneidblech zunächst mit der Kaschierung durch Kleben oder Schweißen zu verbinden, und dann beides gemeinsam auf das Trägerteil aufzubringen. In jedem Fall wird durch die Befestigung des Schneidbleches an der Kaschierung verhindert, daß es in den Fahrgastraum geschleudert wird.

Der rückseitig an das Trägerteil angeformte Führungskanal für den Airbag kann durch an- oder eingearbeitete Formteile verstärkt werden. Diese Formteile, in der Regel Blechformteile, können als Befestigungsstützpunkte für das Trägerteil an der Karosserie genutzt werden und stellen sicher, daß die Reaktionskräfte der Airbagexpansion aufgenommen werden. Sie können darüber hinaus geometrisch als Dämpfungselemente zur Abminderung von Kurzzeit-Spitzen der Reaktionskräfte gestaltet werden, beispielsweise durch eine Wellung oder durch eine Perforation, durch die eine Deformationszone vorgegeben wird.

Das Aufreißen der Kaschierung kann natürlich zusätzlich dadurch verbessert werden, daß sie zumindest im Mittelbereich des Schneidbleches deckungsgleich mit dessen Schneidkanten im Querschnitt geschwächt ist. Dies kann sowohl durch Einkerbung der Rückseite als auch durch eine mit bloßem Auge nicht sichtbare Mikroperforation, beispielsweise mit Laserstrahl eingebracht, geschehen. Da bei dieser Zusatzmaßnahme weder an die Größenordnung noch an die Toleranz der Querschnittsschwächung der Kaschierung hohe Anforderungen gestellt werden, entfallen die beim herkömmlichen Stand der Technik üblichen Schwierigkeiten.

Die Erfindung wird nunmehr anhand der Fign. 1 bis 9 näher erläutert. Es zeigen im einzelnen:
- Fig. 1: eine schematisch dargestellte Ansicht einer Armaturentafel mit dem markierten Einbaubereich eines Beifahrerairbags,
- Fig. 2: Einzelheiten des Verkleidungsteils anhand einer Schnittdarstellung der in Fig. 1 markierten Schnittebene II./.II,
- Fig. 3: in vergrößerter Darstellung Einzelheiten des mit "A" bezeichneten Aufreißbereichs in Fig. 2,
- Fig. 4: in einer Teilansicht der Fig. 1 das Aufreißmuster für das Trägerteil, das den Durchtritt des Airbags ermöglicht,
- Fig. 5: die Draufsicht auf ein Schneidblech mit gezahnten Schneidkanten,
- Fig. 6: eine gezahnte Schneidkante gemäß einer Ausschnittsvergrößerung aus Fig. 5,
- Fig. 7: eine Draufsicht analog Fig. 5 auf ein skelettiertes Schneidblech, bei dem die Schneidkanten aufgestellt sind,
- Fig. 8: einen Schnitt entlang der Linie VIII-VIII in Fig. 7, und
- Fig. 9: aufgestellte Schneidkanten mit Zahnung in einer Teilperspektive.

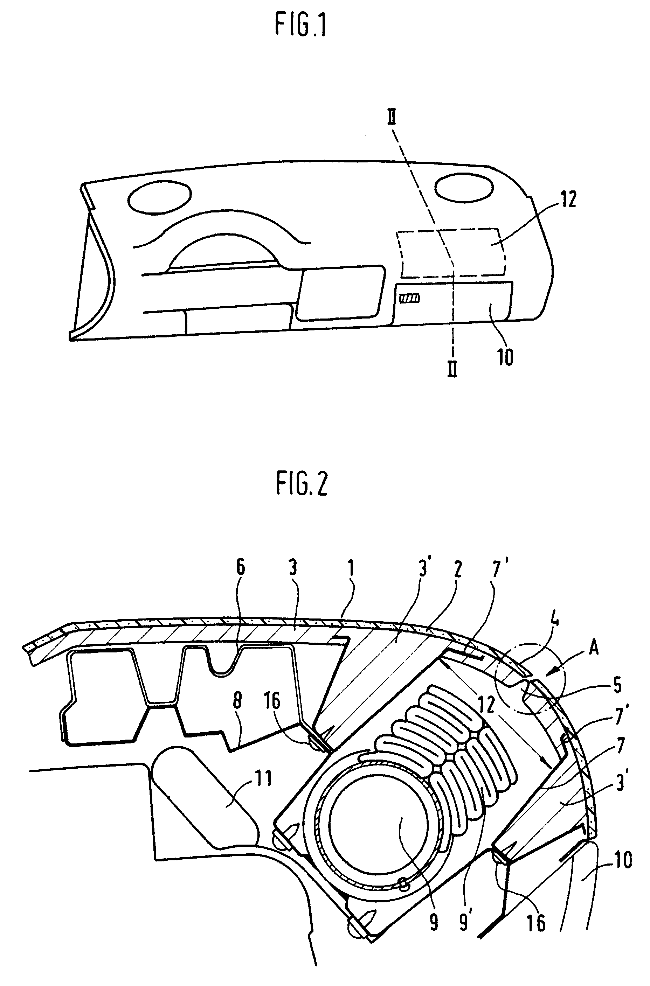

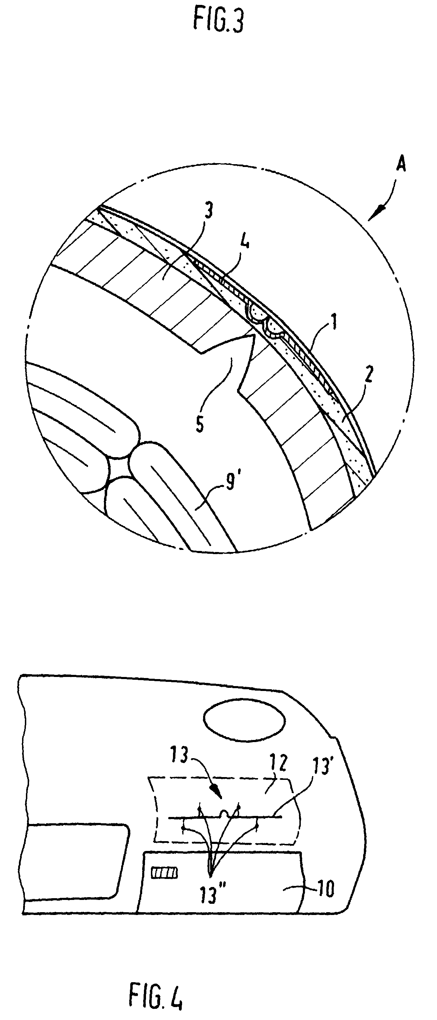

In Fig. 1 ist mit 12 der Einbau- bzw. Öffnungsbereich der verdeckten Airbag-Einheit bezeichnet, die über dem Handschuhfach 10 angebracht ist. Die gestrichelte Linie II./.II markiert die Schnittebene, die in Fig. 2 dargestellt ist. Dort ist mit 1 die Kaschierung und mit 3 das Trägerteil der Armaturentafel bezeichnet, das den mit den Formteilen 7 verstärkten Airbag-Führungskanal 3' rückseitig angeformt aufweist. Die in die Wandung des Trägerteils 3 hineinragenden Fußteile 7' des Formteils 7 versteifen die Basis des Öffnungsbereiches 12 des Führungskanals 3' und verhindern so den Abriß von Verkleidungsteilen während der AirbagExpansion. Die Airbag-Einheit besteht aus dem Gasgenerator 9 und dem Airbag 9', und sie ist auf den mit 6 und 8 bezeichneten Bauelement-Profilen, die einen durchlaufenden Modulträger bilden, befestigt. Mit 11 ist der den Modulträger 6, 8 versteifende Querträger bezeichnet, und mit 2 schließlich eine zwischen Trägerteil 3 und Kaschierung 1 angeordnete Polsterschaumschicht. Die Ausbildung der Reißnaht ist in Fig. 3 näher dargestellt. Der Querschnitt des Trägerteils 3 ist hierzu durch eine Kerbe 5 stark reduziert. Gegenüber dem Kerbgrund sind zwischen der Kaschierung 1 und dem Trägerteil 3, im gezeigten Beispiel eingebettet in die Polsterschaumschicht 2, die aufgestellten Schneidkanten eines Schneidbleches 4 zu erkennen. Die Kerben 5 und die Schneidkanten des Schneidbleches 4 bilden das Aufreißmuster 13 in Fig. 4, das sich aus einer Mittellinie 13' und Seitenlinien 13" zusammensetzt.

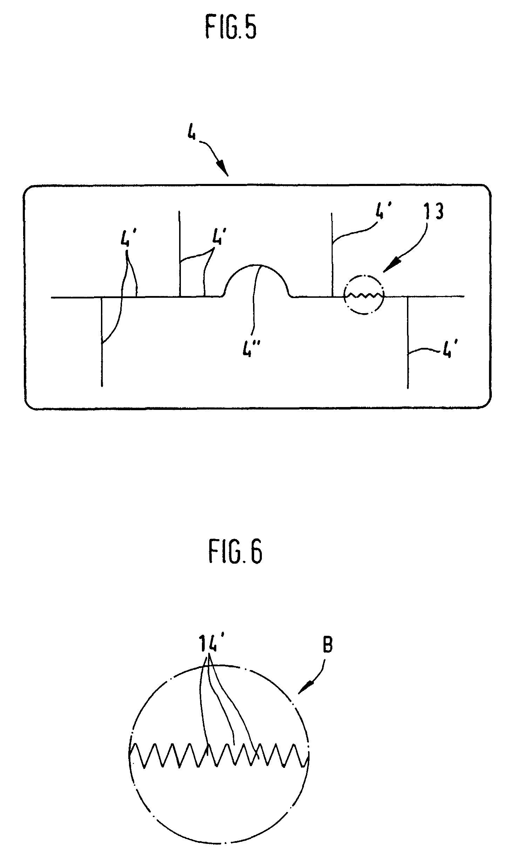

Ein einfaches Schneidblech 4 ist in Fig. 5 dargestellt. Eine rechteckige, näherungsweise 0,1 mm dicke Stahlblechplatte ist mit den durchgestanzten Schlitzen 4' versehen. Die Größe der Platte entspricht dabei etwa dem Öffnungsbereich 12 des Führungskanals 3', und das Schlitzmuster entspricht dem durch die Kerben 5 vorgegebenen Aufreißmuster 13.

Die Schlitze 4', die bei der Aufwölbung im Expansionsfall zu Schneidkanten werden, sind in Fig. 5 vereinfachend als geradlinig verlaufend dargestellt. Wie jedoch die in Fig. 6 wiedergegebene Ausschnittsvergrößerung B zeigt, verlaufen sie zickzackförmig und bilden die Zahnung 14' zum leichteren Aufreißen der Kaschierung. Eine bogenförmig verlaufende Zunge 4" sorgt dafür, daß der Aufriß der Kaschierung 1 in der Mitte beginnt und dann nach beiden Seiten hin weiterlaufen kann.

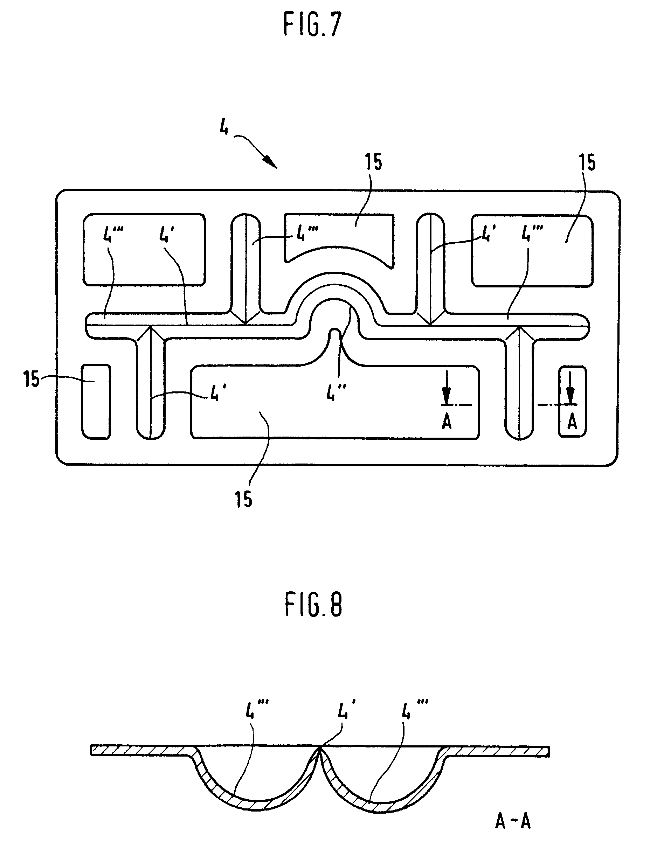

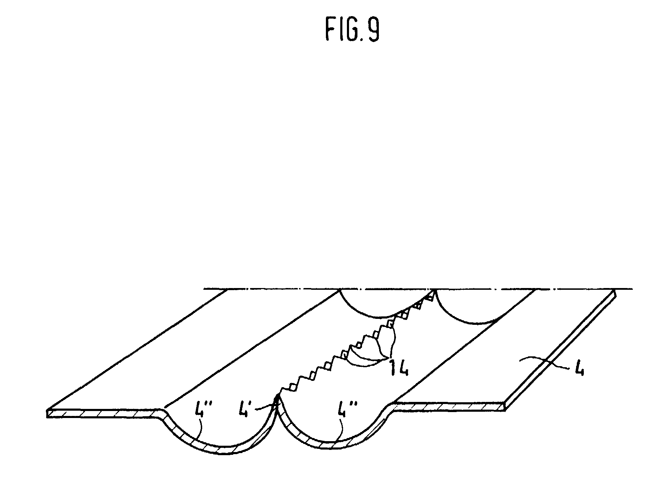

Fig. 7 zeigt eine andere Ausführungsform eines Schneidbleches 4. Es ist durch die Aussparungen 15 skelettiert. Die Schneidkanten 4' sind mit Hilfe der Hohlkehlen 4"' aufgestellt, wie Fig. 8 anhand des Schnittes A-A in Fig. 7 zeigt. Sie können dabei noch gezahnt sein (Fig. 9) und so in ihrer Funktion verbessert werden, da die Zähne 14 die Kaschierung 1 leichter durchtrennen.

Die Figuren erläutern die Erfindung am Beispiel eines Armaturenträgers; es liegt jedoch auf der Hand, daß beispielsweise auch Türinnenverkleidungen in gleicher Weise mit "unsichtbaren" Airbageinbauten versehen werden können.

## Patentansprüche

1. Innenraum-Verkleidungsteil für Fahrzeuge mit Airbag-Ausrüstung, zumindest bestehend aus einem auf der Sichtseite mit einer Folien-Kaschierung (1) versehenen formstabilen Trägerteil (3) mit einem am Einbauort des Airbags (9') durch dessen Expansion aufreißbaren Durchtrittsbereich, der durch eingearbeitete Schwachstellen vorgegeben ist, und einem rückseitigen Airbag-Führungskanal (3'), dessen Öffnung (12) von dem Trägerteil (3) überdeckt und von der Kaschierung (1) auf der Sichtseite markierungsfrei überspannt wird, wobei im Bereich der Führungskanal-Öffnung (12) ein sich bei der Expansion des Airbags (9') öffnender Aufreißbereich durch querschnittsmindernde Kerben (5) im Trägerteil (3) vorgegeben ist, und das Aufreißen der Folien-Kaschierung (1) im Bereich der Kerben (5) durch Schneidvorrichtungen unterstützt wird, die durch die Expansion des Airbags betätigt werden, **dadurch gekennzeichnet,** daß im Bereich der Kerben (5) zwischen dem Trägerteil (3) und der Kaschierung (1) als Schneidvorrichtung ein Schneidblech (4) angeordnet ist, dessen Schneidkanten (4') von durchstanzten Schlitzen gebildet werden, die mit dem Verlauf der Kerben (5) deckungsgleich sind.

2. Verkleidungsteil nach Anspruch 1, dadurch gekennzeichnet, daß im Bereich der Führungskanal-Öffnung (12) ein sich bei der Expansion des Airbags (9') näherungsweise spitzoval öffnender Aufreißbereich durch die querschnittsmindernden Kerben (5) im Trägerteil (3) vorgegeben ist, die ein Linienmuster (13) bilden, das aus einer Mittellinie (13') und Seitenlinien (13") besteht, die von der Mittellinie (13') abzweigend quer oder schräg zu dieser verlaufen, und daß im Bereich des Linienmusters (13) zwischen dem Trägerteil (3) und der Kaschierung (1) das Schneidblech (4) mit den mit dem Linienmuster (13) der Kerben (5) deckungsgleichen Schneidkanten (4') angeordnet ist.

3. Verkleidungsteil nach Anspruch 2, dadurch gekennzeichnet, daß die die Mittellinie (13') des Linienmusters (13) vorgebende Kerbe (5) und die zugehörigen Schneidkante (4') des Schneidblechs (4) vorzugsweise im Mittelbereich einen bogenförmigen, eine örtliche Zunge (4") bildenden Verlauf besitzen.

4. Verkleidungsteil nach einem der Ansprüche 1 bis 3, dadurch gekennzeichnet, daß das Schneidblech (4) eine Dicke von 0,05 mm bis 0,5 mm besitzt.

5. Verkleidungsteil nach Anspruch 4, dadurch gekennzeichnet, daß die durchgestanzten Schlitze der Schneidkanten (4') sägezahnförmig ausgebildet sind, wobei die Abmessungen der "Sägezähne" (14') klein sind gegenüber den Abmessungen des Linienmusters (13).

6. Verkleidungsteil nach einem der Ansprüche 1 bis 3, dadurch gekennzeichnet, daß die Schneidkanten (4') hohlkehlenförmig mit aufgestellten, zur Kaschierung (1) weisenden und gegebenenfalls schneidenartig angeschärften Rändern ausgebildet sind.

7. Verkleidungsteil nach Anspruch 6, dadurch gekennzeichnet, daß die Schneidkanten (4') der Schneidplatte (4) sägezahnförmig ausgebildet sind.

8. Verkleidungsteil nach Anspruch 2 oder 3, dadurch gekennzeichnet, daß das Schneidblech (4) zwischen seinem Umriß und den Schneidkanten (4') Aussparungen (15) derart enthält, daß die Schneidplatte (4) ein dem Linienmuster (13) entsprechendes Stegmuster besitzt.

9. Verkleidungsteil nach einem der Ansprüche 1 bis 8, dadurch gekennzeichnet, daß die Schneidplatte (4) festhaftend mit der Rückseite der Kaschierung (1) verbunden ist.

10. Verkleidungsteil nach einem der Ansprüche 1 bis 9, dadurch gekennzeichnet, daß der integral an das Trägerteil (3) angeformte Führungskanal (3') verstärkende Formteile (7) besitzt.

11. Verkleidungsteil nach Anspruch 10, dadurch gekennzeichnet, daß die verstärkenden Formteile (7) des Führungskanals (3') Befestigungspunkte (16) aufweisen, an denen das Verkleidungsteil an der Karosserie befestigbar ist.

12. Verkleidungsteil nach einem der Ansprüche 1 bis 11, dadurch gekennzeichnet, daß die Kaschierung (1) zumindest im Mittelbereich (4'') des Schneidblechs (4) deckungsgleich mit dessen Schneidkanten (4') im Querschnitt geschwächt ist.

13. Verkleidungsteil nach Anspruch 12, dadurch gekennzeichnet, daß die Querschnittsschwächung eine rückseitige Einkerbung der Kaschierung (1) ist.

14. Verkleidungsteil nach Anspruch 12, dadurch gekennzeichnet, daß die Querschnittsschwächung eine Mikro-Perforation der Kaschierung (1) ist.

15. Verkleidungsteil nach Anspruch 12, dadurch gekennzeichnet, daß die Querschnittsschwächung Bestandteil einer sichtseitigen Einprägung auf der Kaschierung (1) ist.

## Claims

1. Interior trim panel for vehicles fitted with an airbag, said panel consisting at least of a dimensionally stable supporting member (3) provided with a film cover (1) on its visible face and having at the point where the airbag (9') is installed a penetration area which may be torn open by the expansion of the airbag and which is predetermined by incorporated weak points, and having a rear-side airbag guide channel (3') whose opening (12) is covered by the supporting member (3) and by the cover (1) without any markings on the visible face, a tear-open area, in the region of the guide channel opening (12) and opening as the airbag (9') expands, being predetermined by notches (5) in the supporting member (3) which reduce the cross-section, and the tearing open of the film cover (1) in the region of the notches (5) being supported by cutting devices which are actuated by the expansion of the airbag, **characterised in that,** in the region of the notches (5) between the supporting member (3) and the cover (1), there is disposed as a cutting device a cutting metal sheet (4) whose cutting edges (4') are formed from stamped-through slits which coincide with the course of the notches (5).

2. Trim panel according to claim 1, **characterised in that,** in the region of the guide channel opening (12), a tear-open area opening approximately in a pointed oval during the expansion of the airbag (9') is predetermined by the notches (5) in the supporting member (3), which reduce the cross-section and form a line pattern (13) consisting of a centre line (13') and side lines (13") which branch off at right angles from the centre line (13) or run at an oblique angle to same, and in that, in the region of the line pattern (13) between the supporting member (3) and the cover (1) there is disposed the cutting metal sheet (4) with the cutting edges (4') which coincide with the line pattern (13) of the notches (5).

3. Trim panel according to claim 2, **characterised in that** the notch (5) predetermining the centre line (13') of the line pattern (13) and the associated cutting edge (4') of the cutting metal sheet (4) have an arcuate course, preferably in the central region, forming a local tongue (4").

4. Trim panel according to one of claims 1 - 3, **characterised in that** the cutting metal sheet (4) is between 0.05 mm and 0.5 mm thick.

5. Trim panel according to claim 4, **characterised in that** the stamped-through slits of the cutting edges (4') are configured sawtooth, the dimensions of the "saw teeth" (14') being small in relation to the dimensions of the line pattern (13).

6. Trim panel according to one of claims 1 - 3, **characterised in that** the cutting edges (4') are configured concave with erect rims pointing towards the cover (1) and if necessary sharpened like cutters.

7. Trim panel according to claim 6, **characterised in that** the cutting edges (4') of the cutting sheet (4) are configured sawtooth.

8. Trim panel according to claim 2 or 3, **characterised in that** the cutting metal sheet (4) between its contour and the cutting edges (4') contains recesses (15) in such a manner that the cutting sheet (4) has a web pattern corresponding to the line pattern (13).

9. Trim panel according to one of claims 1 - 8, **characterised in that** the cutting sheet (4) is connected firmly adhering to the rear side of the cover (1).

10. Trim panel according to one of claims 1 - 9, **characterised in that** the guide channel (3') formed integrally on the supporting member (3) has reinforcing structural parts (7).

11. Trim panel according to claim 10, **characterised in that** the reinforcing structural parts (7) of the guide channel (3') have fastening points (16) to which the trim panel may be fixed on the vehicle body.

12. Trim panel according to one of claims 1 - 11, **characterised in that** the cover (1) is weakened in cross-section at least in the central region (4") of the cutting metal sheet, coinciding with its cutting edges (4').

13. Trim panel according to claim 12, **characterised in that** the cross-sectional weakening is a notch on the rear side of the cover (1).

14. Trim panel according to claim 12, **characterised in that** the cross-sectional weakening is a micro-perforation of the cover (1).

15. Trim panel according to claim 12, **characterised in that** the cross-sectional weakening forms part of an imprint on the cover (1) on its visible face.

## Revendications

1. Elément de garniture pour l'habitacle d'un véhicule automobile équipé d'un airbag, constitué d'au moins une partie support (3), dimensionnellement stable, pourvue d'une feuille de doublage (1) sur la face visible, cette partie support comportant une zone de passage arrachable par expansion, qui est prédéfinie par des points faibles incorporés, et d'une gaine arrière (3') pour le guidage de l'airbag, dont l'ouverture (12) est couverte par la partie support (3) et est recouverte sans marquage par le doublage (1) sur la face visible ; dans la zone de l'ouverture (12) de la gaine de guidage, une zone d'arrachage, s'ouvrant lors de l'expansion de l'airbag (9'), étant prédéfinie par des rainures (5), qui diminuent la section transversale, aménagées dans la partie support (3) ; et l'arrachage de la feuille de doublage (1) étant, dans la zone des rainures (5), facilité par des dispositifs de coupe, qui sont actionnés par l'expansion de l'airbag ; caractérisé en ce que, dans la zone des rainures (5) entre la partie support (3) et le doublage (1), on a en tant que dispositif de coupe une tôle de coupe (4), dont les arêtes de coupe (4') sont formées par des fentes découpées qui coïncident avec les rainures (5).

2. Elément de garniture selon la revendication 1, caractérisé en ce que, dans la zone de l'ouverture (12) pour la gaine de guidage, une zone d'arrachage, qui lors de l'expansion de l'airbag (9') s'ouvre approximativement en forme d'un ovale pointu, est prédéfinie dans la partie support (3) par les rainures (5) qui diminuent la section transversale, rainures qui forment un dessin de lignes (13), ce dessin étant constitué d'une ligne centrale (13') et de lignes latérales (13"), qui courent en partant de la ligne centrale (13'), perpendiculairement à cette dernière ou obliquement par rapport à cette dernière, et que, dans la zone du dessin de lignes (13), la tôle de coupe (4), qui a des arêtes de coupe (4') coïncidant avec le dessin de lignes (13) des rainures (5), est disposée entre la partie support (3) et le doublage (1).

3. Elément de garniture selon la revendication 2, caractérisé en ce que la rainure (5) qui prédéfinit la ligne centrale (13') du dessin de lignes (13), et l'arête de coupe correspondante (4') de la tôle de coupe (4), ont, de préférence dans la zone centrale, une forme en arc, formant une languette locale (4").

4. Elément de garniture selon l'une des revendications 1 à 3, caractérisé en ce que la tôle de coupe (4) a une épaisseur de 0,05 à 0,5 mm.

5. Elément de garniture selon la revendication 4, caractérisé en ce que les fentes découpées des arêtes de coupe (4') ont une forme en dents de scie, les dimensions des "dents de scie" (14') étant petites par rapport aux dimensions du dessin de lignes (13).

6. Elément de garniture selon l'une des revendications 1 à 3, caractérisé en ce que les arêtes de coupe (4') sont configurées sous forme de gorges creuses, ayant des bords relevés, dirigés vers le doublage (1), et éventuellement affûtés à la manière d'un tranchant.

7. Elément de garniture selon la revendication 6, caractérisé en ce que les arêtes de coupe (4') de la plaque de coupe (4) ont une configuration en dents de scie.

8. Elément de garniture selon la revendication 2 ou 3, caractérisé en ce que la tôle de coupe (4) contient, entre son contour et les arêtes de coupe (4'), des évidements (15), de telle sorte que la plaque de coupe (4) possède un schéma de traverse correspondant au dessin de lignes (13).

9. Elément de garniture selon l'une des revendications 1 à 8, caractérisé en ce que la plaque de coupe (4) est reliée à demeure à la face arrière du doublage (1).

10. Elément de garniture selon l'une des revendications 1 à 9, caractérisé en ce que la gaine de guidage (3'), rapportée d'une manière intégrale à la partie support (3), possède des éléments de renforcement (7).

11. Elément de garniture selon la revendication 10, caractérisé en ce que les éléments de renforcement (7) de la gaine de guidage (3') comportent des points de fixation (16), par lesquels l'élément de garniture peut être fixé à la carrosserie.

12. Elément de garniture selon l'une des revendications 1 à 11, caractérisé en ce que le doublage (1) présente, au moins dans la zone centrale (4") de la tôle de coupe (4), un affaiblissement de sa section transversale, en coïncidence avec ses arêtes de coupe (4').

13. Elément de garniture selon la revendication 12, caractérisé en ce que l'affaiblissement de la section transversale est représenté par une entaille aménagée sur la face arrière du doublage (1).

14. Elément de garniture selon la revendication 12, caractérisé en ce que l'affaiblissement de la section transversale est constitué d'une microperforation du doublage (1).

15. Elément de garniture selon la revendication 12, caractérisé en ce que l'affaiblissement de la section transversale fait partie intégrante d'une empreinte, sur la face visible, aménagée sur le doublage (1).
